# FASCICULE DE BREVET EUROPEEN

(11) **EP 3 237 359 B1**
(45) Date de publication et mention de la délivrance du brevet: **22.05.2019**
(21) Numéro de dépôt: 15823676.0
(22) Date de dépôt: 18.12.2015
(51) Int. Cl.: C04B 35/117, C04B 35/119, C04B 35/14, C04B 35/488, C04B 35/58, C04B 35/80, C04B 35/83, C04B 35/18, C04B 35/185

(54) **PROCÉDÉ DE FABRICATION D'UNE PIÈCE EN MATÉRIAU COMPOSITE**
VERFAHREN ZUR HERSTELLUNG EINES TEILS AUS EINEM VERBUNDWERKSTOFF
METHOD FOR MANUFACTURING A PART MADE OF A COMPOSITE MATERIAL

(30) Priorité: 23.12.2014 FR 1463284
(43) Date de publication de la demande: 01.11.2017
(73) Titulaire: SAFRAN AIRCRAFT ENGINES, 75015 Paris (FR); SAFRAN, 75015 Paris (FR)
(72) Inventeur: PODGORSKI, Michael, 77550 Moissy-Cramayel Cedex (FR); BILLOTTE CABRE, Catherine, La Prairie J5R 5H8 (CA); DAMBRINE, Bruno, Jacques, Gérard, 77550 Moissy-Cramayel Cedex (FR); MOLLIEX, Ludovic, Edmond, Camille, 91800 Brunoy (FR); RUIZ, Edu, Montreal, Québec H3W 2H1 (CA); TURENNE, Sylvain, Saint-Bruno J3V 4W3 (CA)
(74) Mandataire: Desormiere, Pierre-Louis
(86) Numéro de dépôt international: PCT/FR2015/053626
(87) Numéro de publication internationale: WO 2016/102842

(56) Documents cités:
- EP-A1- 0 130 105
- EP-A1- 2 181 974
- WO-A1-2005/000566
- US-A1- 2004 105 969
- US-A1- 2014 161 626
- US-B1- 6 497 776

## Description

### Arrière-plan de l'invention

La présente invention concerne un procédé de fabrication d'une pièce en matériau composite thermostructural notamment de type oxyde/oxyde ou à matrice céramique (CMC), c'est-à-dire comportant un renfort fibreux formé à partir de fibres en matériau réfractaire densifié par une matrice également en matériau réfractaire.

Les pièces en matériau composite oxyde/oxyde sont généralement élaborées par drapage dans un moule d'une pluralité de strates fibreuses réalisées à partir de fibres en oxyde réfractaire, les strates étant chacune préalablement imprégnées avec une barbotine chargée de particules d'oxyde réfractaire. L'ensemble des strates ainsi disposées est ensuite compacté à l'aide d'un contre-moule ou d'une bâche à vide et un passage en autoclave. La préforme chargée ainsi obtenue est alors soumise à un frittage afin de former une matrice en oxyde réfractaire dans la préforme et obtenir une pièce en matériau composite oxyde/oxyde. Cette technique peut être également utilisée pour réaliser des pièces en matériau composite à matrice céramique (CMC). Dans ce cas, les strates fibreuses sont réalisées à partir de fibres de carbure de silicium (SiC) ou de carbone et sont imprégnées avec une barbotine chargée de particules de carbure (ex. SiC), de borure (ex. TiB2) ou de nitrure (ex. Si3N4).

EP2181974 divulgue un procédé de fabrication d'une pièce en matériau composite.

Cependant, ce type de procédé d'élaboration ne permet pas de fabriquer des pièces en matériau composite ayant un taux de matrice élevée et/ou dont les caractéristiques, par exemple les propriétés mécaniques, varient dans l'épaisseur du matériau.

### Obiet et résumé de l'invention

La présente invention a pour but de remédier aux inconvénients précités et de proposer une solution qui permet de contrôler la fabrication des pièces en matériau composite, notamment de type oxyde/oxyde ou CMC, afin d'optimiser le taux volumique de matrice présent dans le matériau et/ou conférer à celui-ci des caractéristiques qui varient dans le sens de l'épaisseur de la pièce.

A cet effet, l'invention propose un procédé de fabrication d'une pièce en matériau composite comprenant les étapes selon la revendication 1. suivantes

En réalisant ainsi au moins deux imprégnations successives avec des barbotines contenant des particules différentes en taille et/ou en nature chimique, il est possible de contrôler le taux volumique de matrice dans la pièce finale et/ou les caractéristiques de la matrice dans le sens de l'épaisseur de la pièce.

Selon un premier aspect du procédé de l'invention, les premières particules présentent une taille moyenne supérieure à la taille moyenne des deuxièmes particules. Il est ainsi possible de combler les interstices présents entre les premières particules avec les deuxièmes particules de manière à obtenir dans la pièce finale un taux volumique élevé de matrice.

Les premières particules peuvent être de la même nature chimique que les deuxièmes particules ou d'une nature chimique différente de celle des deuxièmes particules. En utilisant, des premières et deuxièmes particules ayant une nature chimique différente, il est possible de conférer des propriétés particulières à la matrice obtenue.

Selon un deuxième aspect du procédé de l'invention, celui-ci comprend en outre, après l'étape d'élimination de la phase liquide de la deuxième barbotine et avant l'étape de frittage, les étapes suivantes :
- troisième imprégnation de la texture fibreuse avec une troisième barbotine contenant des troisièmes particules réfractaires,
- élimination de la phase liquide de la troisième barbotine ayant imprégnée la texture fibreuse de manière à ne laisser subsister à l'intérieur de ladite texture que les troisièmes particules réfractaires et obtenir une préforme fibreuse chargée avec les premières, deuxièmes et troisièmes particules réfractaires.

Il est ainsi possible de déposer des particules en surface de la texture qui sont différentes de celles présentes au coeur de la texture.

Dans ce cas, les troisièmes particules peuvent présenter une taille moyenne similaire à la taille moyenne des premières particules, les premières et troisièmes particules présentant une taille moyenne inférieure à la taille moyenne des deuxièmes particules. Cela permet d'obtenir, après formation de la matrice par frittage des particules, une pièce présentant un état de surface amélioré car la matrice présente au niveau de la surface de la pièce a été obtenue à partir de particules plus fines que celles présentes au coeur de la préforme avant frittage.

Selon un l'invention, chaque étape d'imprégnation de la texture fibreuse comprend :
- le placement de la texture fibreuse dans un moule comprenant une chambre d'imprégnation comportant dans sa partie inférieure une pièce en matériau poreux sur laquelle repose une première face de ladite texture, la chambre d'imprégnation étant fermée dans sa partie supérieure par une membrane imperméable déformable placée en regard d'une deuxième face de la texture fibreuse, ladite membrane séparant la chambre d'imprégnation d'une chambre de compaction,
- l'injection d'une barbotine contenant une poudre de particules réfractaires dans la chambre d'imprégnation entre la deuxième face de la texture fibreuse et la membrane,
- l'injection d'un fluide de compression dans la chambre de compaction, le fluide exerçant une pression sur la membrane pour forcer la barbotine à traverser la texture fibreuse,

chaque élimination de la phase liquide de la barbotine comprenant le drainage par la pièce en matériau poreux de la phase liquide de la barbotine ayant traversé la texture fibreuse, les particules réfractaires étant retenues à l'intérieur de ladite texture par ladite pièce en matériau poreux.

En utilisant une pièce en matériau poreux permettant de drainer le liquide des barbotines, le procédé de l'invention permet d'éliminer la phase liquide des barbotines introduites dans la texture fibreuse sans éliminer les particules solides réfractaires également présentes dans la texture. L'élimination de la phase liquide de la barbotine par drainage permet en outre de ne pas perturber la répartition des particules réfractaires au sein de la texture fibreuse et de contrôler, par conséquent, la structure de la matrice dans la pièce finale.

La pièce en matériau poreux peut être rigide et présenter une forme correspondant à la forme de la pièce en matériau composite à réaliser. Selon une variante, la pièce en matériau poreux peut être est déformable, le fond du moule présentant une forme correspondant à la forme de la pièce en matériau composite à réaliser ; dans ce cas, la pièce en matériau poreux s'adapte à la forme du fond du moule.

Les fils de la préforme peuvent être des fils formés de fibres constituées d'un ou plusieurs des matériaux suivants : l'alumine, la mullite, la silice, un aluminosilicate, un borosilicate, du carbure de silicium et du carbone.

Les particules réfractaires peuvent être en un matériau choisi parmi : l'alumine, la mullite, la silice, un aluminosilicate, un aluminophosphate, la zircone, un carbure, un borure et un nitrure.

Dans un exemple de réalisation, la pièce en matériau composite obtenue peut constituer une aube de turbomachine.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe éclatée d'un outillage conformément à un mode de réalisation de l'invention,
- la figure 2 est une vue schématique en coupe montrant l'outillage de la figure 1 fermé avec une texture fibreuse positionnée dans celui-ci,
- les figures 3 à 6 sont des vues schématiques en coupe montrant deux étapes d'imprégnation successives d'une texture fibreuse avec des barbotines chargées de particules de taille différente dans l'outillage de la figure 2 conformément à un mode de réalisation du procédé de l'invention,
- les figures 7 à 12 sont des vues schématiques en coupe montrant trois étapes d'imprégnation successives d'une texture fibreuse avec des barbotines chargées de particules de taille différente conformément à un autre mode de réalisation du procédé de l'invention.

### Description détaillée de modes de réalisation

Le procédé de fabrication d'une pièce en matériau composite thermostructural, notamment de type oxyde/oxyde ou CMC, conforme à la présente invention débute par la réalisation d'une texture fibreuse destinée à former le renfort de la pièce.

La texture fibreuse utilisée peut être de diverses natures et formes telles que notamment:
- tissu obtenu par tissage bidimensionnel (2D),
- tissu obtenu par tissage tridimensionnel (3D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

Par « tissage bidimensionnel », on entend ici un mode de tissage classique par lequel chaque fil de trame passe d'un côté à l'autre de fils d'une seule couche de chaîne ou inversement.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Les fils utilisés pour tisser la texture fibreuse destinée à former le renfort fibreux de la pièce en matériau composite oxyde/oxyde ou CMC peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

Une fois la texture fibreuse réalisée, celle-ci est imprégnée successivement avec au moins deux barbotines différentes conformément à l'invention.

On décrit ici un premier exemple de mise en oeuvre du procédé de l'invention consistant à réaliser une pièce en matériau composite oxyde/oxyde dont la matrice est formée à partir de deux types de particules d'oxyde réfractaire, à savoir un premier type de particules ayant une taille moyenne supérieure à celle des particules du deuxième type. Ainsi et comme expliqué en détails ci-après, en déposant successivement dans une texture fibreuse des premières particules et des deuxièmes particules ayant une taille moyenne inférieure à celle des premières particules, on optimise le remplissage de la texture avec les particules d'oxyde réfractaire et on réduit significativement les microporosités dans le matériau final. Les premières et deuxièmes particules d'oxyde réfractaire peuvent être d'une même nature chimique ou d'une nature chimique différente. En modifiant la nature chimique des deuxièmes particules, on peut jouer sur les conditions de frittage des premières particules. Par exemple, l'introduction de deuxièmes particules de zircone permet d'abaisser la température de frittage de premières particules d'alumine. L'imprégnation de la texture fibreuse est ici réalisée avec un outillage conforme à l'invention qui est particulièrement bien adapté pour permettre l'introduction des barbotines chargées de particules solides dans des textures fibreuses 2D d'épaisseur importante (empilement de strates ou plis tissés 2D) ou des textures 3D présentant des géométries complexes.

Une texture fibreuse 10 est placée dans un outillage 100. Dans l'exemple décrit ici, la texture fibreuse 10 est réalisée suivant une des techniques définies ci-avant (par exemple empilement de strates 2D ou tissage 3D) avec des fils d'alumine Nextel 610™. La texture fibreuse 10 est ici destinée à former le renfort fibreux d'une aube en matériau composite oxyde/oxyde.

L'outillage 100 comprend un moule 110 dont le fond 111 est muni d'un évent 112. Le moule 110 comprend également une paroi latérale 113 comportant un port d'injection 114 équipée d'une vanne 1140. Une pièce en matériau poreux 120 est placée sur la surface interne 111a du fond 111. La pièce en matériau poreux 120 comporte une face inférieure 120b en contact avec la surface interne 111a du fond 111 et une face supérieure 120a destinée à recevoir la texture fibreuse 10. Dans l'exemple décrit ici, la pièce 120 est réalisée avec un matériau déformable tandis que la surface interne 111A du fond 111 du moule 110 présente une forme ou profil correspondant à la forme de la pièce finale à fabriquer, ici une aube de moteur aéronautique. La pièce 120 étant déformable, elle se conforme au profil de la surface interne 111a du fond 111 et présente sur sa face supérieure 120a une forme similaire à celle de la surface 111a. La pièce 120 peut par exemple être réalisée en polytétrafluoroéthylène (PTFE) microporeux comme les produits « microporous PTFE » vendus par la société Porex®.

Selon une variante de réalisation, la pièce en matériau poreux est rigide et présente sur face supérieure une géométrie correspondant à la forme de la pièce finale à fabriquer. Dans ce cas la pièce peut être notamment réalisée par thermoformage.

A titre d'exemple, la pièce en matériau poreux peut présenter une épaisseur de plusieurs millimètres et un taux moyen de porosités d'environ 30%. La taille moyenne des pores (D50) de la pièce en matériau poreux peut par exemple être comprise entre 1 µm et 2 µm.

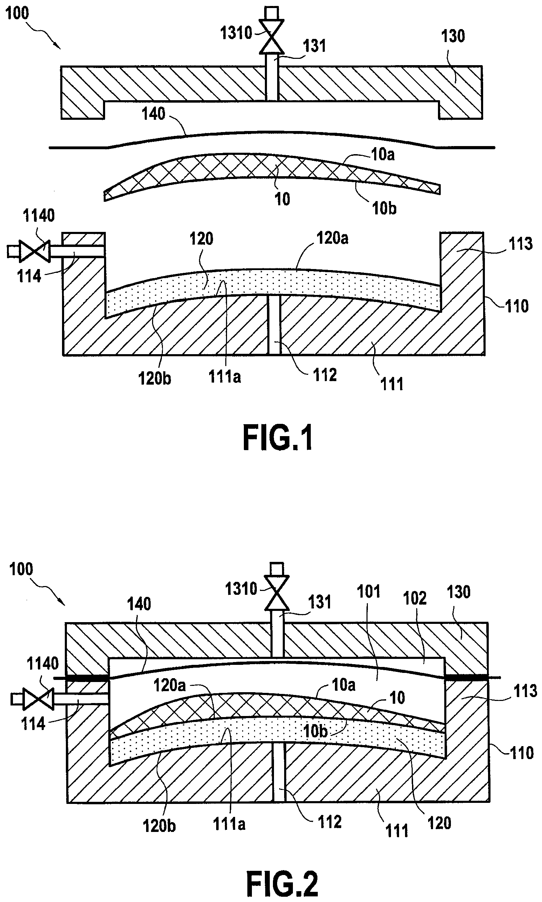

L'outillage 100 comprend en outre un couvercle 130 comportant un port d'injection 131 équipé d'une vanne 1310 et une membrane déformable 140 qui, une fois l'outillage fermé (figure 2), sépare une chambre d'imprégnation 101 dans laquelle est présente la texture fibreuse 10 d'une chambre de compaction 102 située au-dessus de la membrane 140. La membrane 140 peut être réalisée par exemple en silicone.

Après placement de la texture 10 sur la face supérieure 120a de la pièce en matériau poreux 120a, on ferme le moule 110 avec le couvercle 130 (figure 2).

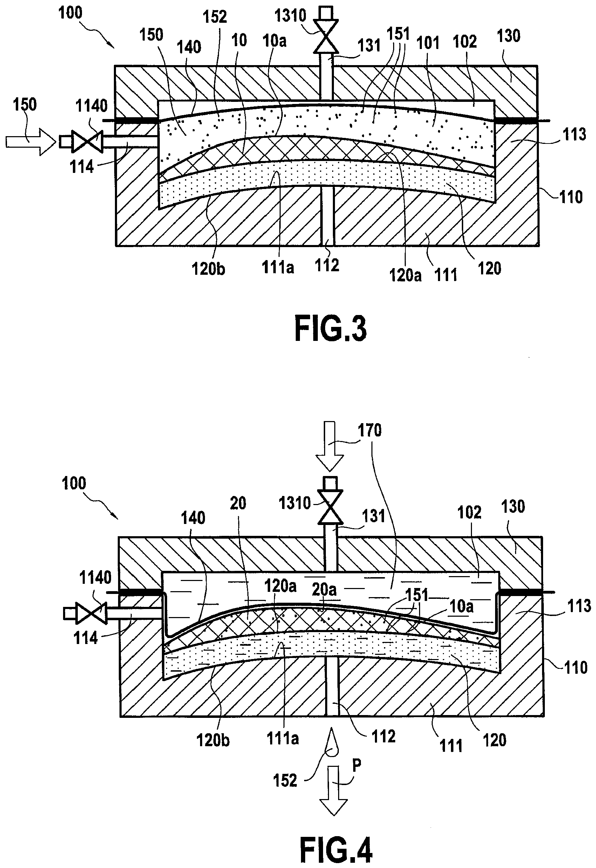

On injecte alors une première barbotine 150 dans la chambre d'imprégnation 101 par le port d'injection 114 dont la vanne 1140 est ouverte (figure 3). La barbotine 150 est dans cet exemple destinée à permettre la formation d'une partie de la matrice d'oxyde réfractaire dans la texture. La barbotine 150 correspond à une poudre de particules d'alumine 151 en suspension dans une phase liquide 152, les particules présentant une taille moyenne ou dimension particulaire moyenne comprise entre 0,1 µm et 10 µm. La phase liquide 152 de la barbotine peut être notamment constituée par de l'eau (pH acide), de l'éthanol ou tout autre liquide dans lequel il est possible de mettre la poudre désirée en suspension. Un liant organique peut être aussi ajouté (PVA par exemple, soluble dans l'eau). Ce liant permet d'assurer la tenue du cru après séchage et avant frittage.

En outre de l'alumine, les particules d'oxyde réfractaire peuvent être également en un matériau choisi parmi la mullite, la silice, la zircone, un aluminosilicate et un aluminophosphate. En fonction de leur composition de base, les particules d'oxyde réfractaire peuvent être en outre mélangées avec des particules d'alumine, de zircone, d'aluminosilicate, d'oxydes de Terre rare, de dissilicates de Terre rare (utilisés par exemple dans les barrières environnementales ou thermiques) ou toute autre charge permettant de rajouter des fonctions spécifiques au matériau final (noir de carbone, graphite, carbure de silicium, etc.).

La quantité de barbotine 150 injectée dans la chambre d'imprégnation 101 est déterminée en fonction du volume de la texture fibreuse 10 à imprégner. C'est la quantité de poudre initialement introduite qui pilotera l'épaisseur de calage et donc le taux volumique de fibres (Tvf) et de matrice (Tvm).

Une fois la barbotine 150 injectée dans la chambre d'imprégnation 101, on procède à l'opération de compaction en injectant un fluide de compression 170, par exemple de l'huile, dans la chambre de compaction 102 par le port d'injection 131 dont la vanne 1310 est ouverte, la vanne 1140 du port d'injection 114 ayant été préalablement fermée (figure 4). Le fluide de compression 170 applique une pression sur la barbotine 150 au travers de la membrane 140 qui force la barbotine 150 à pénétrer dans la texture fibreuse 10. Le fluide 170 impose une pression hydrostatique sur l'intégralité de la membrane 140 et, par conséquent, sur l'intégralité de la barbotine présente au-dessus de la texture 10. La pression appliquée par la membrane 140 sur la barbotine et sur la texture fibreuse est de préférence inférieure à 15 bars, par exemple 7 bars, de manière à faire pénétrer la barbotine dans la texture et compacter suffisamment la texture pour permettre à la phase liquide de la barbotine d'être drainée par la pièce en matériau poreux sans dégrader la préforme résultante.

La pièce en matériau poreux 120 qui est située du côté de la face 10b de la texture fibreuse opposée à la face 10a à partir de laquelle la barbotine pénètre dans la texture remplit plusieurs fonctions (figure 3). En effet, la pièce 120 permet le drainage du liquide de la barbotine à l'extérieur de la texture fibreuse, le liquide ainsi drainé étant évacué ici par l'évent 112 (figure 4). Le drainage est réalisé à la fois pendant et après l'opération de compaction. Lorsqu'il n'y a plus de liquide s'écoulant par l'évent 112, le drainage est terminé. En combinaison avec l'application d'une pression sur la barbotine par le fluide de compression, un pompage P, par exemple au moyen d'une pompe à vide primaire (non représentée sur les figures 1 à 4), peut être réalisé au niveau de l'évent 112. Ce pompage est optionnel. Un chauffage peut suffire. Toutefois la combinaison des deux permet d'accélérer le séchage.

En outre, l'outillage peut être muni de moyens de chauffage, comme des éléments résistifs intégrés aux parois de l'outillage, afin d'augmenter la température dans la chambre de compaction et faciliter l'évacuation du liquide de la barbotine par évaporation. La température dans la chambre de compaction peut être élevée à une température comprise entre 80°C et 105°C.

La pièce en matériau poreux 120 permet également de retenir les particules solides d'oxyde réfractaire présentes dans la barbotine, les particules d'oxyde réfractaire se déposant ainsi progressivement par sédimentation dans la texture fibreuse.

La pièce 120 permet également de maintenir la texture fibreuse en forme pendant l'opération de compaction car elle reprend sur sa face supérieure 120a la forme du fond 111 du moule 100 correspondant à la forme de la pièce finale à fabriquer.

On obtient ainsi une préforme fibreuse intermédiaire 20 chargée de particules d'oxyde réfractaire, ici des particules d'alumine 151 (figure 4). La préforme intermédiaire est ensuite libérée de la pression de compaction par vidange du fluide de compression de la chambre de compaction 102, la préforme conservant toutefois sa géométrie de compaction.

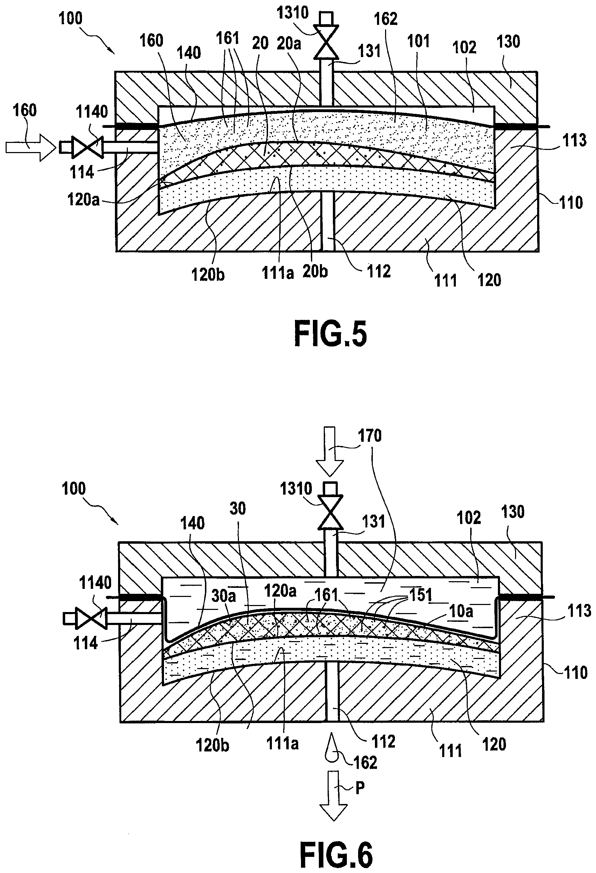

Après une éventuelle phase de refroidissement, on procède à l'imprégnation de la préforme fibreuse intermédiaire 20 avec une deuxième barbotine 160 qui est injectée par le port d'injection 114 dont la vanne 1140 est ouverte (figure 5). La barbotine 160 est dans cet exemple destinée à compléter la formation de la matrice d'oxyde réfractaire dans la préforme. La barbotine 160 correspond à une poudre de particules d'alumine 161 en suspension dans une phase liquide 162. Les particules d'alumine 161 présentent une taille moyenne ou dimension particulaire moyenne inférieure à celle des particules 151 qui peut être comprise entre 0,1 µm et 1 µm (facteur 10 entre les grosses particules et les plus fines). La phase liquide 162 de la barbotine peut être notamment constituée par de l'eau (pH acide), de l'éthanol ou tout autre liquide dans lequel il est possible de mettre la poudre désirée en suspension. Un liant organique peut être aussi ajouté (PVA par exemple, soluble dans l'eau). Ce liant permet d'assurer la tenue du cru après séchage et avant frittage. La phase liquide 162 est de préférence de même nature que la phase liquide 152.

La quantité de barbotine 160 injectée dans la chambre d'imprégnation 101 est déterminée en fonction du volume de la préforme fibreuse intermédiaire 20 à imprégner.

Une fois la barbotine 160 injectée dans la chambre d'imprégnation 101, on procède à l'opération de compaction en injectant à nouveau le fluide de compression 170 dans la chambre de compaction 102 par le port d'injection 131 dont la vanne 1310 est ouverte, la vanne 1140 du port d'injection 114 ayant été préalablement fermée (figure 6). Le fluide de compression 170 applique une pression sur la barbotine 160 au travers de la membrane 140 qui force la barbotine 160 à pénétrer dans la préforme fibreuse intermédiaire 20. La pression appliquée par la membrane 140 sur la barbotine et sur la préforme est de préférence inférieure à 15 bars, par exemple 7 bars, de manière à faire pénétrer la barbotine dans la texture et compacter suffisamment la texture pour permettre à la phase liquide de la barbotine d'être drainée par la pièce en matériau poreux sans dégrader la préforme.

Lorsqu'il n'y a plus de liquide s'écoulant par l'évent 112, le drainage est terminé. En combinaison avec l'application d'une pression sur la barbotine par le fluide de compression, un pompage P, par exemple au moyen d'une pompe à vide primaire (non représentée sur les figures 1 à 4), peut être réalisé au niveau de l'évent 112. Ce pompage est optionnel. Un chauffage peut suffire. Toutefois la combinaison des deux permet d'accélérer le séchage.

En outre, la température dans la chambre de compaction peut être élevée afin de faciliter l'évacuation du liquide de la barbotine par évaporation, par exemple à une température comprise entre 80°C et 105°C.

Les particules d'alumine 161 sont retenues dans la préforme par la pièce en matériau poreux 120. Les particules 161 ayant une taille moyenne inférieure à celle des particules 151, elles se déposent par sédimentation dans les interstices subsistant entre les particules 151 déposées précédemment.

On obtient ainsi une préforme fibreuse 30 chargée des particules d'alumine 151 et 161 (figure 6). La préforme est ensuite libérée de la pression de compaction par vidange du fluide de compression de la chambre de compaction 102.

La préforme est ensuite extraite de l'outillage et soumise à un traitement thermique de frittage sous air à une température comprise entre 1000°C et 1200°C afin de fritter les particules d'oxyde réfractaire ensemble et former ainsi une matrice en oxyde réfractaire dans la préforme. On obtient alors une pièce en matériau composite oxyde/oxyde munie d'un renfort fibreux obtenu par tissage 3D qui présente un taux volumique de microporosités très -contrôlé et, par conséquent, un taux volumique de macroporosité faible.

En outre de l'alumine, les particules d'oxyde réfractaire 151 et 161 peuvent être également en un matériau choisi parmi la mullite, la silice, la zircone, un aluminosilicate et un aluminophosphate. En fonction de leur composition de base, les particules d'oxyde réfractaire peuvent être en outre mélangées avec des particules d'alumine, de zircone, d'aluminosilicate, d'oxydes de Terre rare, de dissilicates de Terre rare (utilisés par exemple dans les barrières environnementales ou thermiques) ou toute autre charge permettant de rajouter des fonctions spécifiques au matériau final (noir de carbone, graphite, carbure de silicium, etc.).

Une pièce en matériau composite CMC peut être obtenue de la même façon en réalisant la texture fibreuse avec des fibres de carbure de silicium ou de carbone et en utilisant une barbotine chargée de particules de carbure de carbure (ex. SiC), de borure (ex. TiB2) ou de nitrure (ex. Si3N4).

On décrit maintenant un deuxième exemple de mise en oeuvre du procédé de l'invention consistant à réaliser une pièce en matériau composite CMC dont l'état de surface final est contrôlé grâce au procédé de l'invention. Plus précisément et comme expliqué en détails ci-après, en déposant au voisinage de la surface de la texture fibreuse des particules réfractaires ayant une taille moyenne significativement inférieure à celle des particules réfractaires déposées au coeur de la texture, on réduit significativement les microporosités dans le matériau final tout en obtenant une pièce finale qui présente un état de surface plus lisse compatible avec des applications aérodynamiques. Les particules réfractaires peuvent être d'une même nature chimique ou d'une nature chimique différente.

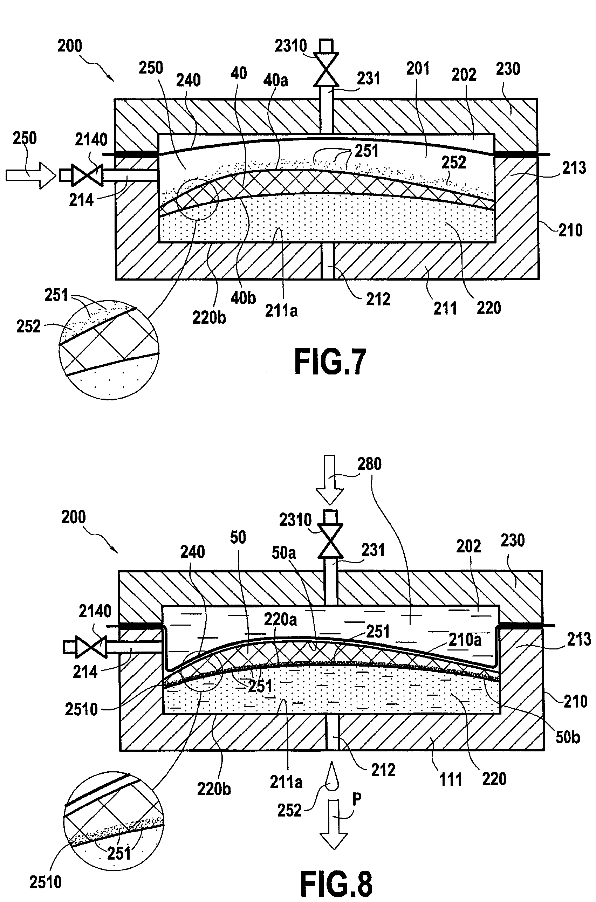

L'imprégnation de la texture fibreuse est ici réalisée avec un outillage 200 similaire à l'outillage 100 décrit précédemment en relation avec les figures 1 à 6 et comprend, par conséquent, les mêmes éléments, à savoir :
- un moule 210 comportant un fond 211 muni d'un évent 212 et une paroi latérale 213 comportant un port d'injection 214 équipé d'une vanne 2140 (figure 7),
- un couvercle 230 comportant un port d'injection 231 équipé d'une vanne 2310 et une membrane déformable 240, par exemple en silicone, qui, une fois l'outillage fermé (figure 7), sépare une chambre d'imprégnation 201 dans laquelle est présente une texture fibreuse 40 d'une chambre de compaction 202 située au-dessus de la membrane 240,
- une pièce en matériau poreux 220 placée sur la surface interne 211a du fond 211 et comportant une face inférieure 220b en contact avec la surface interne 211a du fond 211 et une face supérieure 220a destinée à recevoir la texture fibreuse 40.

Dans l'exemple décrit ici, la pièce en matériau poreux 220 est réalisée avec un matériau rigide et la face supérieure 220a de la pièce en matériau poreux 220 présente une géométrie correspondant à la forme de la pièce finale à fabriquer, ici une aube de moteur aéronautique.

Toujours dans l'exemple décrit ici, la texture fibreuse 40 est réalisée suivant une des techniques décrites ci-avant avec des fils de carbure de silicium. La texture fibreuse 40 est ici destinée à former le renfort fibreux d'une aube en matériau composite SiC/SiC, c'est-à-dire un matériau CMC comprenant un renfort en fibres SiC densifié par une matrice SiC.

Après placement de la texture 40 sur la face supérieure 220a de la pièce en matériau poreux 220 et fermeture du moule 210 avec le couvercle 230, on injecte une première barbotine 250 dans la chambre d'imprégnation 201 par le port d'injection 214 dont la vanne 2140 est ouverte (figure 7). La barbotine 250 est destinée à permettre la formation de la portion de matrice présente au niveau de la face inférieure 40b de la texture 40, portion qui participe à l'état de surface de la face inférieure de la pièce finale. La barbotine 250 correspond à une poudre de particules de SiC251 en suspension dans une phase liquide 252, les particules présentant une taille moyenne ou dimension particulaire moyenne comprise entre 0,1 µm et 5 µm ?. La phase liquide 252 de la barbotine peut être notamment constituée par de l'eau (pH acide), de l'éthanol ou tout autre liquide dans lequel il est possible de mettre la poudre désirée en suspension. Un liant organique peut être aussi ajouté (PVA par exemple, soluble dans l'eau). Ce liant permet d'assurer la tenue du cru après séchage et avant frittage.

La quantité de barbotine 250 injectée dans la chambre d'imprégnation 201 est déterminée en fonction de l'épaisseur de la couche de particules 251 que l'on souhaite former à partir de la face inférieure de la texture.

Une fois la barbotine 250 injectée dans la chambre d'imprégnation 201, on procède à l'opération de compaction en injectant un fluide de compression 280, par exemple de l'huile, dans la chambre de compaction 202 par le port d'injection 231 dont la vanne 2310 est ouverte, la vanne 2140 du port d'injection 214 ayant été préalablement fermée (figure 8). Le fluide de compression 280 applique une pression sur la barbotine 250 au travers de la membrane 240 qui force la barbotine 250 à pénétrer dans la texture fibreuse 40. Les particules 251 retenues par la pièce en matériau poreux 220 se déposent par sédimentation à partir de la face inférieure 40b de la texture 40 tandis que la phase liquide 252 de la barbotine est drainée à l'extérieure de la texture 40 par la pièce 220.

Lorsqu'il n'y a plus de liquide s'écoulant par l'évent 112, le drainage par la pièce en matériau poreux 220 est terminé. En combinaison avec l'application d'une pression sur la barbotine par le fluide de compression, un pompage P, par exemple au moyen d'une pompe à vide primaire (non représentée sur les figures 1 à 4), peut être réalisé au niveau de l'évent 112. Ce pompage est optionnel. Un chauffage peut suffire. Toutefois la combinaison des deux permet d'accélérer le séchage.

Après séchage et éventuellement pompage, on obtient ainsi une préforme fibreuse intermédiaire 50 comportant au niveau de sa face inférieure 50b une couche 2510 de particules de SiC 251. La préforme intermédiaire 50 est ensuite libérée de la pression de compaction par vidange du fluide de compression de la chambre de compaction 202.

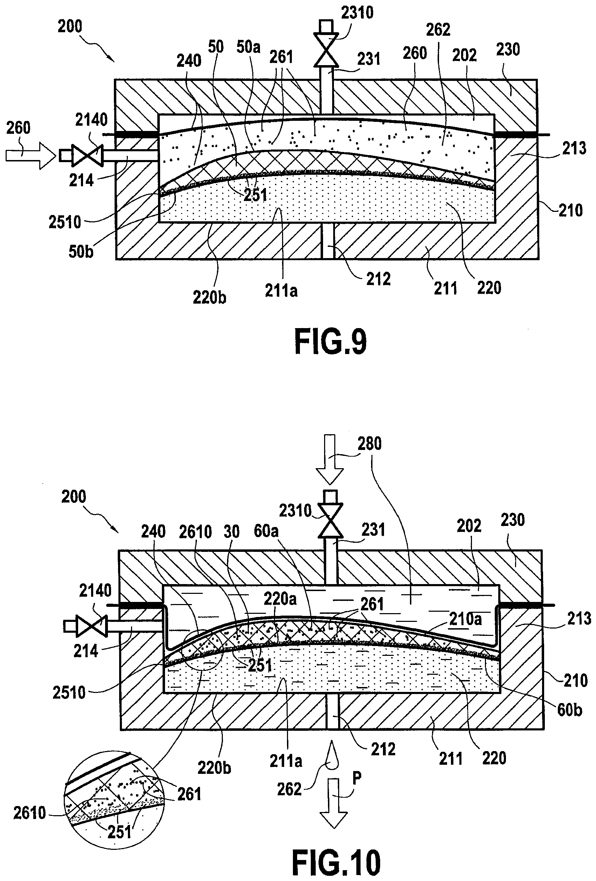

Après une éventuelle phase de refroidissement, on procède à l'imprégnation de la préforme fibreuse intermédiaire 50 avec une deuxième barbotine 260 qui est injectée par le port d'injection 214 dont la vanne 2140 est ouverte (figure 9). La barbotine 260 est destinée à permettre la formation de la matrice réfractaire à coeur de la préforme 50, c'est-à-dire dans l'épaisseur de la préforme 50 située entre les faces inférieure 50b et supérieure 50a. La barbotine 260 correspond à une poudre de particules de SiC 261 en suspension dans une phase liquide 262. Les particules de SiC 261 présentent une taille moyenne ou dimension particulaire moyenne supérieure à celle des particules 251 qui peut être comprise entre 0,1 µm et 5 µm. La phase liquide 162 de la barbotine peut être notamment constituée par de l'eau (pH acide), de l'éthanol ou tout autre liquide dans lequel il est possible de mettre la poudre désirée en suspension. Un liant organique peut être aussi ajouté (PVA par exemple, soluble dans l'eau). Ce liant permet d'assurer la tenue du cru après séchage et avant frittage. La phase liquide 262 est de préférence de même nature que la phase liquide 252.

La quantité de barbotine 260 injectée dans la chambre d'imprégnation 201 est déterminée en fonction de l'épaisseur de la préforme fibreuse intermédiaire 40 à imprégner.

Une fois la barbotine 260 injectée dans la chambre d'imprégnation 201, on procède à l'opération de compaction en injectant à nouveau le fluide de compression 280 comme déjà décrit ci-avant. Lors de l'opération de compaction, les particules 261 retenues par la pièce en matériau poreux 220 se déposent par sédimentation dans la préforme tandis que le liquide 262 de la barbotine 260 est drainé de la préforme par la pièce 220 (figure 10).

On obtient ainsi une préforme fibreuse intermédiaire 60 comportant une couche 2510 de particules de SiC 251 au niveau de sa face inférieure 60b et une couche 2610 de particules de SiC 260 s'étendant sur l'épaisseur de la préforme. La préforme intermédiaire 60 est ensuite libérée de la pression de compaction par vidange du fluide de compression de la chambre de compaction 202.

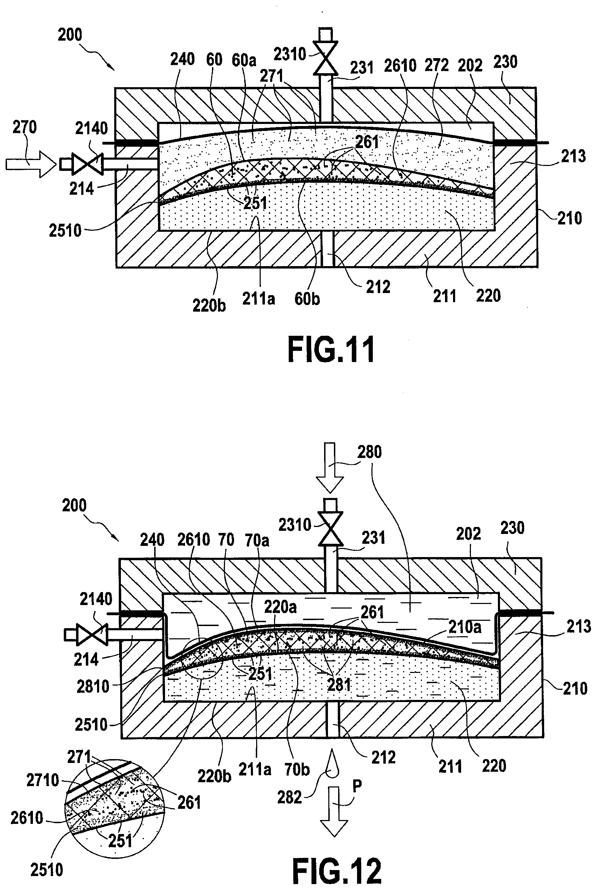

Après une éventuelle phase de refroidissement, on procède à l'imprégnation de la préforme fibreuse intermédiaire 60 avec une troisième barbotine 270 qui est injectée par le port d'injection 214 dont la vanne 2140 est ouverte (figure 11). La barbotine 270 est destinée, d'une part, à compléter la formation de la matrice SiC à coeur de la préforme 60, c'est-à-dire dans l'épaisseur de la préforme 40 située entre les faces inférieure 40b et supérieure 40a, et, d'autre part, à permettre la formation de la portion de matrice présente au niveau de la face supérieure 60a de la préforme 60, portion qui participe à l'état de surface de la face supérieure de la pièce finale. La barbotine 270 correspond à une poudre de particules de SiC 271 en suspension dans une phase liquide 272, les particules 271 présentant une taille moyenne ou dimension particulaire moyenne comprise entre 0,1 µm et 5 µm. La phase liquide 272 de la barbotine peut être notamment constituée par un des liquides décrits ci-avant et est de préférence de même nature que les phases liquides 252 et 262. Les particules 271 peuvent avoir la même taille que les particules 251. Elles peuvent toutefois avoir une taille différente de celle des particules 251 si l'on souhaite avoir des états de surface différents entre la face inférieure et la face supérieure de la pièce finale.

La quantité de barbotine 270 injectée dans la chambre d'imprégnation 201 est déterminée en fonction à la fois de l'épaisseur de la couche de particules 271 que l'on souhaite former à partir de la face supérieure de la texture et du volume d'interstices présents entre les particules 261 qui doivent être comblés par des particules 271.

Une fois la barbotine 270 injectée dans la chambre d'imprégnation 201, on procède à l'opération de compaction en injectant à nouveau le fluide de compression 280 comme déjà décrit ci-avant. Lors de l'opération de compaction, les particules 271 se déposent par sédimentation d'abord dans les interstices présents entre les particules 261 puis au niveau de la face supérieure 60a de la préforme 60 tandis que le liquide 272 de la barbotine 270 est drainé de la préforme par la pièce 220. En combinaison avec l'application d'une pression sur la barbotine par le fluide de compression, un pompage P, par exemple au moyen d'une pompe à vide primaire (non représentée sur les figures 1 à 4), peut être réalisé au niveau de l'évent 112. Ce pompage est optionnel. Un chauffage peut suffire. Toutefois la combinaison des deux permet d'accélérer le séchage.

On obtient ainsi une préforme fibreuse finale 70 comportant une couche 2510 de particules de SiC 251 au niveau de sa face inférieure 70b, une couche 2610 de particules de SiC 261 s'étendant sur l'épaisseur de la préforme avec des particules 271 dans les interstices et une couche 2710 de particules de SiC 271 au niveau de sa face supérieure 70a. La préforme finale 70 est ensuite démoulée par vidange du fluide de compression de la chambre de compaction 202.

La préforme 70 est extraite de l'outillage et soumise à un traitement thermique de frittage sous air à une température comprise entre 1800°C et 2000°C afin de fritter les particules de SiC réfractaire ensemble et former ainsi une matrice SiC dans la préforme. On obtient alors une pièce en matériau composite SiC/SiC munie d'un renfort fibreux obtenu par tissage 3D qui présente un taux volumique de microporosités très faible ainsi qu'un état de surface amélioré compatible avec des applications aérodynamique.

Une pièce en matériau composite oxyde/oxyde peut être obtenue de la même façon en réalisant la texture fibreuse avec des fibres d'oxyde réfractaire (ex. alumine) et en utilisant une barbotine chargée de particules d'oxyde réfractaire (ex. alumine, mullite, silice, etc.).

Les étapes d'imprégnation d'une structure fibreuse avec plusieurs barbotines et les étapes d'élimination de la phase liquide de chaque barbotine peuvent être également réalisées avec d'autres techniques que celle décrite ci-avant et mise en oeuvre dans l'outillage 100 ou 200. Les techniques de type infusion, moulage par injection dits « RTM » ou aspiration de poudre submicronique dits « APS » peuvent être également utilisées pour mettre en oeuvre les étapes d'imprégnation d'une texture ou préforme fibreuse avec des barbotines et les étapes d'élimination de la phase liquide de chaque barbotine.

## Revendications

1. Procédé de fabrication d'une pièce en matériau composite comprenant les étapes suivantes :
- formation d'une texture fibreuse (10) à partir de fibres réfractaires,
- première imprégnation de la texture fibreuse (10) avec une première barbotine (150) contenant des premières particules réfractaires (151),
- élimination de la phase liquide (152) de la première barbotine (151) ayant imprégnée la texture fibreuse (10) de manière à ne laisser subsister à l'intérieur de ladite texture que les premières particules réfractaires (151),
- deuxième imprégnation de la texture fibreuse (20) avec une deuxième barbotine (160) contenant des deuxièmes particules réfractaires (161),
- élimination de la phase liquide (162) de la deuxième barbotine (160) ayant imprégnée la texture fibreuse (20) de manière à ne laisser subsister à l'intérieur de ladite texture que les deuxièmes particules réfractaires (161) et obtenir une préforme fibreuse (30) chargée avec les premières et deuxièmes particules réfractaires (151, 161), et
- frittage des premières et deuxièmes particules réfractaires (151, 161) présentes dans la préforme fibreuse (30) afin de former une matrice réfractaire dans ladite préforme,
**caractérisé en ce que** les première et deuxième étapes d'imprégnation de la texture fibreuse comprennent chacune :
- le placement de la texture fibreuse (10) dans un moule (110) comprenant une chambre d'imprégnation (101) comportant dans sa partie inférieure une pièce en matériau poreux (120) sur laquelle repose une première face (10b) de ladite texture (10), la chambre d'imprégnation (101) étant fermée dans sa partie supérieure par une membrane imperméable déformable (140) placée en regard d'une deuxième face (10a) de la texture fibreuse (10), ladite membrane séparant la chambre d'imprégnation (101) d'une chambre de compaction (102),
- injection d'une barbotine (150 ; 160) contenant une poudre de particules réfractaires (151 ; 161) dans la chambre d'imprégnation (101) entre la deuxième face (10a) de la texture fibreuse (10) et la membrane (140),
- injection d'un fluide de compression (170) dans la chambre de compaction (102), le fluide exerçant une pression sur la membrane (140) pour forcer la barbotine à traverser la texture fibreuse,
et **en ce que** chaque élimination de la phase liquide (152 ; 162) de la barbotine (150 ; 160) comprend le drainage par la pièce en matériau poreux (120) de la phase liquide de la barbotine ayant traversé la texture fibreuse (10), les particules réfractaires (151 ; 161) étant retenues à l'intérieur de ladite texture par ladite pièce en matériau poreux.

2. Procédé selon la revendication 1, **caractérisé en ce que** les premières particules (151) présentent une taille moyenne supérieure à la taille moyenne des deuxièmes particules (161).

3. Procédé selon la revendication 1 ou 2, **caractérisé en ce que** les premières particules (151) sont de la même nature chimique que les deuxièmes particules (161).

4. Procédé selon la revendication 1 ou 2, **caractérisé en ce que** les premières particules (151) ont une nature chimique différente de celle des deuxièmes particules (161).

5. Procédé selon l'une quelconque des revendications 1 à 4, **caractérisé en ce qu'**il comprend en outre, après l'étape d'élimination de la phase liquide (262) de la deuxième barbotine (260) et avant l'étape de frittage, les étapes suivantes :
- troisième imprégnation de la texture fibreuse (60) avec une troisième barbotine (270) contenant des troisièmes particules réfractaires (271),
- élimination de la phase liquide (272) de la troisième barbotine (270) ayant imprégnée la texture fibreuse (60) de manière à ne laisser subsister à l'intérieur de ladite texture que les troisièmes particules réfractaires (271) et obtenir une préforme fibreuse (70) chargée avec les premières, deuxièmes et troisièmes particules réfractaires (251, 261, 271).

6. Procédé selon la revendication 5, **caractérisé en ce que** les troisièmes particules (271) présentent une taille moyenne similaire à la taille moyenne des premières particules (251) et **en ce que** les premières et troisièmes particules (251, 271) présentent une taille moyenne supérieure à la taille moyenne des deuxièmes particules (261).

7. Procédé selon l'une quelconque des revendications 1 à 6, **caractérisé en ce que** la pièce en matériau poreux (220) est rigide et présente une forme correspondant à la forme de la pièce en matériau composite à réaliser.

8. Procédé selon l'une quelconque des revendications 1 à 6, **caractérisé en ce que** la pièce en matériaux poreux (120) est déformable et le fond (111) du moule (110) présente une forme correspondant à la forme de la pièce en matériau composite à réaliser, la pièce en matériau poreux (120) s'adaptant à la forme du fond (111) du moule (110).

9. Procédé selon l'une quelconque des revendications 1 à 8, **caractérisée en ce que** les fils de la préforme sont formés de fibres constituées d'un ou plusieurs des matériaux suivants : l'alumine, la mullite, la silice, un aluminosilicate, un borosilicate, du carbure de silicium et du carbone.

10. Procédé selon l'une quelconque des revendications 1 à 9, **caractérisé en ce que** les particules réfractaires sont en un matériau choisi parmi : l'alumine, la mullite, la silice, un aluminosilicate, un aluminophosphate, la zircone, un carbure, un borure et un nitrure.

11. Procédé selon l'une quelconque des revendications 1 à 10, **caractérisé en ce que** la pièce en matériau composite obtenue constitue une aube de turbomachine.

## Patentansprüche

1. Verfahren zur Herstellung eines Teils aus Verbundwerkstoff, umfassend die folgenden Schritte:
- Ausbilden einer Faserstruktur (10) aus feuerfesten Fasern,
- erste Imprägnierung der Faserstruktur (10) mit einem ersten Schlicker (150), der erste feuerfeste Teilchen (151) enthält,
- Entfernen der flüssigen Phase (152) des ersten Schlickers (151), der die Fasestruktur (10) imprägniert hat, um innerhalb der Struktur nur die ersten feuerfesten Teilchen (151) bestehen zu lassen,
- zweite Imprägnierung der Faserstruktur (20) mit einem zweiten Schlicker (160), der zweite feuerfeste Teilchen (161) enthält,
- Entfernen der flüssigen Phase (162) des zweiten Schlickers (160), der die Fasestruktur (20) imprägniert hat, um innerhalb der Struktur nur die zweiten feuerfesten Teilchen (161) bestehen zu lassen und um einen mit den ersten und zweiten feuerfesten Teilchen (151, 161) beladenen Faservorformling (30) zu erhalten, und
- Sintern der ersten und zweiten feuerfesten Teilchen (151, 161), die in dem Faservorformling (30) vorhanden sind, um eine feuerfeste Matrix in dem Vorformling zu bilden,
**dadurch gekennzeichnet, dass** der erste und der zweite Schritt des Imprägnierens der Faserstruktur jeweils umfassen:
- das Anordnen der Faserstruktur (10) in einer Form (110) mit einer Imprägnierungskammer (101), welche in ihrem unteren Teil ein Teil aus porösem Material (120) aufweist, auf dem eine erste Seite (10b) der Struktur (10) aufliegt, wobei die Imprägnierungskammer (101) in ihrem oberen Teil durch eine verformbare undurchlässige Membran (140), die gegenüber einer zweiten Seite (10a) der Faserstruktur (10) angeordnet ist, verschlossen ist, wobei die Membran die Imprägnierungskammer (101) von einer Verdichtungskammer (102) trennt,
- Einspritzen eines Schlickers (150; 160), der ein Pulver aus feuerfesten Teilchen (151; 161) enthält, in die Imprägnierungskammer (101) zwischen der zweiten Seite (10a) der Faserstruktur (10) und der Membran (140),
- Einspritzen eines Druckfluids (170) in die Verdichtungskammer (102), wobei das Fluid einen Druck auf die Membran (140) ausübt, um den Schlicker zum Durchlaufen der Faserstruktur zu zwingen,
und dass jedes Entfernen der flüssigen Phase (152; 162) des Schlickers (150; 160) das Drainieren der flüssigen Phase des Schlickers, welcher die Faserstruktur (10) durchlaufen hat, über das Teil aus porösem Material (120) umfasst, wobei die feuerfesten Teilchen (151; 161) innerhalb der Struktur durch das Teil aus porösem Material zurückgehalten werden.

2. Verfahren nach Anspruch 1, **dadurch gekennzeichnet, dass** die ersten Teilchen (151) eine mittlere Größe aufweisen, die größer als die mittlere Größe der zweiten Teilchen (161) ist.

3. Verfahren nach Anspruch 1 oder 2, **dadurch gekennzeichnet, dass** die ersten Teilchen (151) von der gleichen chemischen Art wie die zweiten Teilchen (161) sind.

4. Verfahren nach Anspruch 1 oder 2, **dadurch gekennzeichnet, dass** die ersten Teilchen (151) von einer chemischen Art sind, die sich von derjenigen der zweiten Teilchen (161) unterscheidet.

5. Verfahren nach einem der Ansprüche 1 bis 4, **dadurch gekennzeichnet, dass** es ferner nach dem Schritt des Entfernens der flüssigen Phase (262) des zweiten Schlickers (260) und vor dem Sinterschritt die folgenden Schritte umfasst:
- dritte Imprägnierung der Faserstruktur (60) mit einem dritten Schlicker (270), der dritte feuerfeste Teilchen (271) enthält,
- Entfernen der flüssigen Phase (272) des dritten Schlickers (270), der die Fasestruktur (60) imprägniert hat, um innerhalb der Struktur nur die dritten feuerfesten Teilchen (271) bestehen zu lassen und um einen mit den ersten, zweiten und dritten feuerfesten Teilchen (251, 261, 271) beladenen Faservorformling (70) zu erhalten.

6. Verfahren nach Anspruch 5, **dadurch gekennzeichnet, dass** die dritten Teilchen (271) eine mittlere Größe aufweisen, die ähnlich der mittleren Größe der ersten Teilchen (251) ist, und dass die ersten und dritten Teilchen (251, 271) eine mittlere Größe aufweisen, die größer als die mittlere Größe der zweiten Teilchen (261) ist.

7. Verfahren nach einem der Ansprüche 1 bis 6, **dadurch gekennzeichnet, dass** das Teil aus porösem Material (220) starr ist und eine Form aufweist, die der Form des herzustellenden Verbundwerkstoffteils entspricht.

8. Verfahren nach einem der Ansprüche 1 bis 6, **dadurch gekennzeichnet, dass** das Teil aus porösem Material (120) verformbar ist und der Boden (111) der Form (110) eine Form aufweist, die der Form des herzustellenden Verbundwerkstoffteils entspricht, wobei das Teil aus porösem Material (120) sich der Form des Bodens (111) der Form (110) anpasst.

9. Verfahren nach einem der Ansprüche 1 bis 8, **dadurch gekennzeichnet, dass** die Fäden des Vorformlings von Fasern gebildet sind, die aus einem oder mehreren der folgenden Materialien bestehen: Aluminiumoxid, Mullit, Siliciumdioxid, einem Aluminosilikat, einem Borosilikat, Siliciumcarbid und Kohlenstoff.

10. Verfahren nach einem der Ansprüche 1 bis 9, **dadurch gekennzeichnet, dass** die feuerfesten Teilchen aus einem Material bestehen, das ausgewählt ist aus: Aluminiumoxid, Mullit, Siliciumdioxid, einem Aluminosilikat, einem Aluminiumphosphat, Zirkonoxid, einem Carbid, einem Borid und einem Nitrid.

11. Verfahren nach einem der Ansprüche 1 bis 10, **dadurch gekennzeichnet, dass** das erhaltene Verbundwerkstoffteil eine Turbomaschinenschaufel bildet.

## Claims

1. A method of fabricating a part out of composite material, the method comprising the following steps:
• forming a fiber texture (10) from refractory fibers;
• impregnating the fiber texture (10) for a first time with a first slip (150) containing first refractory particles (151);
• eliminating the liquid phase (152) from the first slip (151) that has impregnated the fiber texture (10) so as to leave within said texture only the first refractory particles (151);
• impregnating the fiber texture (20) for a second time with a second slip (160) containing second refractory particles (161);
• eliminating the liquid phase (162) from the second slip (160) that has impregnated the fiber texture (20) so as to leave within said texture only the second refractory particles (161) and obtain a fiber preform (30) filled with the first and second refractory particles (151, 161); and
• sintering the first and second refractory particles (151, 161) present in the fiber preform (30) in order to form a refractory matrix in said preform;
the method being **characterized in that** each of the first and second steps of impregnating the fiber texture comprises:
• placing the fiber texture (10) in a mold (110) having an impregnation chamber (101) including in its bottom portion a part made of porous material (120) on which a first face (10b) of said texture (10) rests, the impregnation chamber (101) being closed in its top portion by a deformable impermeable diaphragm (140) placed facing a second face (10a) of the fiber texture (10), said diaphragm separating the impregnation chamber (101) from a compacting chamber (102);
• injecting a slip (150; 160) containing a powder of refractory particles (151; 161) into the impregnation chamber (101) between the second face (10a) of the fiber texture (10) and the diaphragm (140);
• injecting a compression fluid (170) into the compacting chamber (102), the fluid exerting pressure on the diaphragm (140) to force the slip to pass through the fiber texture; and
**in that** each step of eliminating the liquid phase (152; 162) from the slip (150; 160) comprises draining the liquid phase of the slip that has passed through the fiber texture (10) via the porous material part (120), the refractory particles (151; 161) being retained inside said texture by said porous material part.

2. A method according to claim 1, **characterized in that** the first particles (151) present a mean size greater than the mean size of the second particles (161).

3. A method according to claim 1 or claim 2, **characterized in that** the first particles (151) are of the same chemical nature as the second particles (161).

4. A method according to claim 1 or claim 2, **characterized in that** the first particles (151) are of a chemical nature that is different from that of the second particles (161).

5. A method according to any one of claims 1 to 4, **characterized in that** it further comprises, after the step of eliminating the liquid phase (262) from the second slip (260) and before the sintering step, the following steps:
• impregnating the fiber texture (60) a third time with a third slip (270) containing third refractory particles (271); and
• eliminating the liquid phase (272) from the third slip (270) that has impregnated the fiber texture (60) so as to leave within said texture only the third refractory particles (271) and obtain a fiber preform (70) filled with the first, second, and third refractory particles (251, 261, 271).

6. A method according to claim 5, **characterized in that** the third particles (271) present a mean size similar to the mean size of the first particles (251), and **in that** the first and third particles (251, 271) present a mean size that is greater than the mean size of the second particles (261).

7. A method according to any one of claims 1 to 6, **characterized in that** the porous material part (220) is rigid and presents a shape matching the shape of the composite material part that is to be made.

8. A method according to any one of claims 1 to 6, **characterized in that** the porous material part (120) is deformable and the bottom (111) of the mold (110) presents a shape corresponding to the shape of the composite material part that is to be made, the porous material part (120) taking on the shape of the bottom (111) of the mold (110).

9. A method according to any one of claims 1 to 8, **characterized in that** the yarns of the preform are formed by fibers made up of one or more of the following materials: alumina, mullite, silica, an aluminosilicate, a borosilicate, silicon carbide, and carbon.

10. A method according to any one of claims 1 to 9, **characterized in that** the refractory particles are made of a material selected from: alumina, mullite, silica, an aluminosilicate, an aluminophosphate, zirconia, a carbide, a boride, and a nitride.

11. A method according to any one of claims 1 to 10, **characterized in that** the composite material part that is obtained constitutes a turbine engine blade.
